# EUROPEAN PATENT SPECIFICATION

(11) **EP 3 986 679 B1**
(45) Date of publication and mention of the grant of the patent: **18.09.2024**
(21) Application number: 20826225.3
(22) Date of filing: 16.06.2020
(51) Int. Cl.: G05D 1/00

(54) **MOVING ROBOT AND METHOD OF CONTROLLING THE SAME**
MOBILER ROBOTER UND VERFAHREN ZUR STEUERUNG DAVON
ROBOT MOBILE ET SON PROCÉDÉ DE COMMANDE

(30) Priority: 18.06.2019 KR 20190072389
(43) Date of publication of application: 27.04.2022
(73) Proprietor: LG Electronics Inc., SEOUL 07336 (KR)
(72) Inventor: KIM, Minuk, Seoul 08592 (KR); LEE, Hyeshin, Seoul 08592 (KR)
(74) Representative: Ter Meer Steinmeister & Partner
(86) International application number: PCT/KR2020/007752
(87) International publication number: WO 2020/256370

(56) References cited:
- WO-A1-2018/074903
- WO-A1-2019/004773
- KR-A- 20110 009 547
- KR-B1- 100 791 384
- KR-B1- 100 877 072
- US-A1- 2010 001 991
- US-A1- 2010 070 125
- US-A1- 2017 225 321
- US-A1- 2017 239 813

## Description

### [Technical Field]

The present disclosure relates to a moving robot and a method of controlling the same, and particularly, to a moving robot which generates a map while traveling a cleaning area and a method of controlling the same.

### [Background Art]

In general, a moving robot is a device which sucks foreign substances such as dust from a bottom surface while self-traveling an area to be cleaned without user intervention so as to automatically clean the area.

The moving robot can create a map for the area while traveling the area to be cleaned. The moving robot can perform the cleaning while traveling based on the generated map.

Korean Laid-Open Patent Application No. 10-2009-0019459 discloses that a moving robot analyzes a plurality of images captured in each divided area and matches common features so as to generate a map for the entire area.

In the related art, the moving robot detects an obstacle while traveling to generate a map in a form in which the obstacle is reflected, and thus, it is possible to generate a map for an area where the moving robot can travel.

In general, furniture such as a chair or a table and home appliances are disposed in an indoor space. The moving robot detects the obstacles such as the furniture or the home appliances while traveling, and the obstacles are reflected on the map.

Even when a user disposes the furniture or the like in the indoor space, in general, the user recognizes the indoor space as one space. That is, while the user recognizes the room in the form of a square, the moving robot does not display an area which is not accessible due to furniture on the map, and thus, a map having a complex outline is generated.

Accordingly, a difference occurs between the indoor space recognized by the user and the indoor space on the map generated by the moving robot. In particular, when a plurality of indoor spaces are connected to each other, complexity of the generated map further increases.

Due to this problem, the user may not divide each indoor space only with the map generated by the moving robot. If the user cannot recognize the indoor space on the map, there are problems that it is difficult to issue a cleaning command for a specific indoor space, an incorrect cleaning command may be input, and a current location of the moving robot cannot be checked.

Accordingly, a method for generating a map according to a shape of the indoor space recognized by the user is desirable.
US 2010/0001991 A1 relates to an apparatus which is configured to build a map by extracting a pattern of a landmark of the same kind, such as a straight line, a circle or a rectangle, and adjusting a landmark map using the extracted pattern for localization. The localizations of landmarks are identified from an image of a ceiling, which is captured by an image capturing unit of the apparatus. The apparatus is further configured to generate a grid map, to extract a pattern of obstacle information from the grid map and to compare the extracted pattern of obstacle information from the grid map with the extracted pattern formed by the landmarks of the identified same kind, and to adjust the landmark map based on a result of the comparison.

### [Disclosure]

### [Technical Problem]

The present disclosure provides a moving robot and a method of controlling the same capable of correcting a shape of an area on a map while generating the map based on an obstacle detected during traveling.

The present disclosure also provides a moving robot and a method of controlling the same capable of correcting a shape of an area on a map while generating the map based on an obstacle detected during traveling.

The present disclosure also provides a moving robot and a method of controlling the same capable of correcting a map so that a user can easily check a plurality of areas.

The present disclosure also provides a moving robot and a method of controlling the same capable of displaying an area where the moving robot can travel and generating a map based on a shape of a real area.

### Solution to Problem

The present disclosure provides a moving robot and a method of controlling the same, in which a map of which a shape is corrected based on a shape of a ceiling for each area is generated on the basis of a map generated by detecting an obstacle.

In the present disclosure, the ceiling is captured for each area to extract the shape of each area and correct the map.

In the present disclosure, unnecessary information of the captured image is filtered to extract the feature.

In the present disclosure, the image is analyzed to extract the feature, and the shape of the ceiling is extracted through a correlation between a plurality of features.

In the present disclosure, the correlation of the feature extracted from the image can be determined based on at least one of a capturing time, a capturing order, a location of the captured image.

In the present disclosure, the features having the correlation are combined with each other to extract the shape of the area.

In the present disclosure, locations for a plurality of areas are matched with each other, and thus, it is possible to generate a map including the shapes of the plurality of areas.

In the present disclosure, a shape of an area according to the shape of the ceiling and a shape of an area according to a detection result of the obstacle during traveling are combined with each other to generate a map.

In an aspect, there is provided a moving robot including: a main body configured to travel an area; an obstacle detector configured to detect an obstacle located in a traveling direction of the main body; an image acquirer configured to capture a front and a top in the traveling direction; and a controller, in which the controller generates a first map which includes information on the obstacle detected by the obstacle detector and is created for an area where the main body can travel, generates a second map which determines a shape of a ceiling from a plurality of features extracted by analyzing the image captured by the image acquirer and indicates a shape of the area corresponding to the shape of the ceiling, and generates a map in which the first map according to an obstacle detection result and the second map indicating the shape of the area are combined with each other.

In another aspect, there is provided a method of controlling a moving robot, including: detecting an obstacle located in a traveling direction by an obstacle detector during traveling; capturing images of a front and a top in the traveling direction by an image acquirer during the traveling; generating a first map which includes information on the obstacle located in the traveling direction and is created for an area where the main body can travel; analyzing the image to extract a feature for determining a shape of a ceiling; generating a second map which connects a plurality of features to each other to determine the shape of the ceiling and indicates a shape of the area corresponding to the shape of the ceiling; and generating a final map in which the first map and the second map are combined with each other so that the obstacle and the shape of the area are combined with each other.

### Advantageous Effects of Invention

According to the moving robot and the method of controlling the same of the present disclosure, the map based on the detected obstacle is corrected according to the shape of the ceiling, and thus, it is possible to generate the map having the shape similar to the shape of the actual indoor space.

According to the present disclosure, the map which is generated by the moving robot and includes the obstacle is corrected so that the shape of the area is reflected to the map, and thus, it is possible to provide a map similar to an actual environment to the user.

According to the present disclosure, the captured images are arranged in units of a frame in order of a time and are matched to the location information of the moving robot, and thus, the shape of the area can be easily extracted from the image changed according to the movement of the moving robot.

According to the present disclosure, the features extracted from the image are combined with each other to determine the shape of the area.

According to the present disclosure, the unnecessary images are filtered, and thus, it is possible to improve a processing speed of the image.

According to the present disclosure, the map is generated based on the shape of the area, and thus, the user can easily divide the plurality of areas.

According to the present disclosure, the user easily divides the area, and thus, a false input of the control command is reduced, and a correct cleaning command can be input.

According to the present disclosure, the user can easily check the current stat or the cleaning state of the moving robot for each area.

According to the present disclosure, the map is differently displayed if necessary, and thus, a convenience of the user is improved.

### Brief Description of Drawings

Fig. 1 is a perspective view illustrating a moving robot according to an embodiment of the present disclosure.
Fig. 2 is a block diagram illustrating a main portion of the moving robot according to the embodiment of the present disclosure.
Figs. 3A and 3B are exemplary views illustrating a map of the moving robot according to the embodiment of the present disclosure.
Fig. 4 is a view illustrating an area where the moving robot according to the embodiment of the present disclosure travels.
Figs. 5A to 5E are views illustrating images captured by the moving robot while the moving robot according to the embodiment of the present disclosure travels.
Figs. 6A and 6B are views for explaining a method of extracting a feature from the image of the moving robot according to the embodiment of the present disclosure.
Figs. 7A to 7I are views illustrating feature data extracted from the image of the moving robot according to the embodiment of the present disclosure.
Figs. 8A to 8C are exemplary views illustrating maps generated by the image captured by the moving robot according to the embodiment of the present disclosure and the obstacle detected by the moving robot.
Fig. 9 is a view illustrating a map including a plurality of areas of the moving robot according to the embodiment of the present disclosure.
Fig. 10 is a flowchart illustrating a control method according to the generation of the map of the moving robot according to the embodiment of the present disclosure.
Fig. 11 is a flowchart illustrating a method of extracting a shape of the area from an image of moving robot according to the embodiment of the present disclosure.

### Mode for the Invention

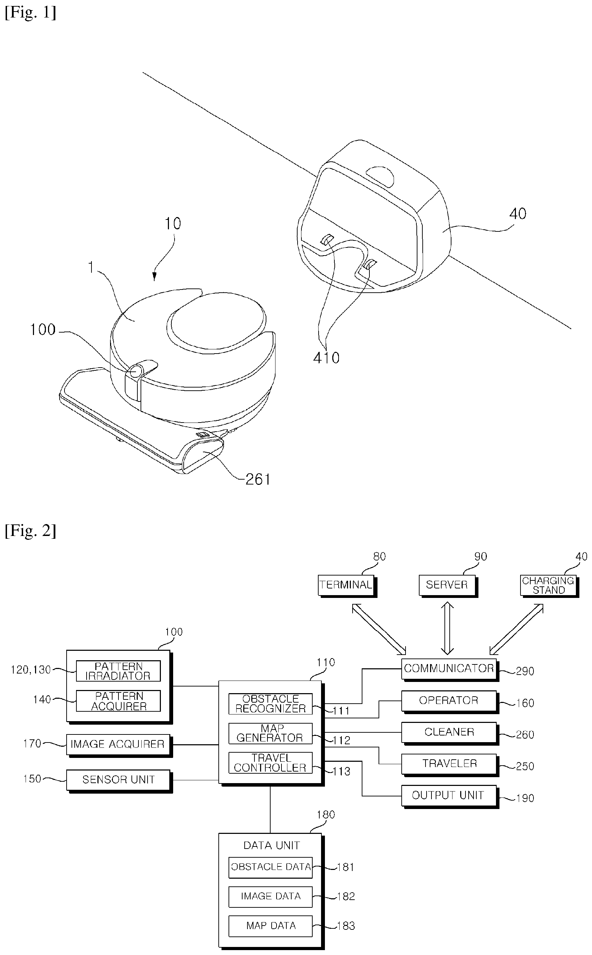

Fig. 1 is a perspective view illustrating a moving robot according to an embodiment of the present disclosure.

Referring to Fig. 1, a moving robot 1 according to an embodiment of the present disclosure includes a main body 10 which moves along a bottom of an area to be cleaned and sucks foreign substances such as dust on the bottom, and a detecting means which is disposed on a front surface of the main body 10 and detects an obstacle.

The main body 10 may include a casing (not illustrated) which forms an exterior and forms a space in which parts constituting the main body 10 are accommodated, a suction unit 261 which is disposed in the casing to suck the foreign substances such as dust or garbage, and a right wheel (not illustrated) and a left wheel (not illustrated) which are provided rotatably in the casing. As the right and left wheels rotate, the main body 10 moves along the bottom of the area to be cleaned, and the foreign substances are sucked through the suction unit 261 formed toward the bottom surface while the main body 10 moves.

The suction unit 261 may include a suction fan (not illustrated) for generating suction power, and a suction port (not illustrated) through which an airflow generated by rotation of the suction fan is sucked. The suction unit 261 may include a filter (not illustrated) for collecting the foreign substances from the airflow sucked through the suction port, and a foreign substance collection container (not illustrated) in which the foreign substances collected by the filter is accumulated.

The suction unit 261 includes a rotating brush (not illustrated), and the rotating brush is rotated when the suction unit sucks the airflow to assist the collection of the foreign substances. The suction unit is configured to be detachable as necessary. The main body 10 may further includes a plurality of brushes (not illustrated) which are located on a front side of a bottom surface of the casing, and have brushes including a plurality of blades extending radially.

A damp floorcloth cleaner may be attached to and detached from the suction unit 261. The damp floorcloth cleaner may be mounted on a rear surface of the suction port. In some cases, the damp floorcloth cleaner may be configured separately from the suction unit and can be replaced and mounted at a location fastened to the suction unit. The damp floorcloth cleaner rotates while moving and wipes the bottom surface in a traveling direction.

The main body 10 may include a traveler (not illustrated) which drives the right and left wheels. The traveler may include at least one drive motor.

The main body 10 may further includes a plurality of brushes (not illustrated) which are located on the front side of the bottom surface of the casing, and have brushes including the plurality of blades extending radially. The plurality of brushes are rotated to remove the dust from the bottom of the area to be cleaned, and thus, the dust separated from the bottom is sucked through the suction port and is collected in the collection container.

A control panel including an operator (not illustrated) for receiving various commands to control the moving robot 1 from the user is provided on an upper surface of the casing.

The detecting means includes an obstacle detector 100, a sensor unit 150 which includes a plurality of sensors, and an image acquirer 170 which captures an image. In some cases, the obstacle detector 100 may include the image acquirer 170 and the sensor unit 150.

The obstacle detector 100 may use a 3D sensor which detects an obstacle through an image captured by irradiating an obstacle with a light pattern. In addition, the obstacle detector 100 may detect an obstacle in the traveling direction using ultrasound, infrared rays, and lasers. The obstacle detector 100 may include at least one camera, and can detect an obstacle from an image captured by the camera.

The obstacle detector 100 may be disposed on a front surface of the main body 10.

The obstacle detector 100 is fixed to the front surface of the casing, and includes a first pattern irradiator 120, a second pattern irradiator 130 and a pattern acquirer 140. In this case, as illustrated, the pattern acquirer may be installed on a lower portion of the pattern irradiator or disposed between the first and second pattern irradiators to capture the irradiated pattern as an image. The first pattern irradiator and the second pattern irradiator irradiate a pattern at a predetermined irradiation angle.

The image acquirer 170 captures an image in the traveling direction of the moving robot 1. The image acquirer 170 may capture a front or ceiling in the traveling direction. The image acquirer 170 may be provided to face the ceiling, and may also be provided forward to capture the front side in the traveling direction.

Moreover, according to an installation location of the image acquirer 170 and an installation angle in the traveling direction in the main body 10, the image acquirer 170 may simultaneously capture the front in the traveling direction and the upward side, that is, the ceiling in the traveling direction. In the image acquirer, an angle of view captured may be set differently according to performance of the installed camera or a type of lens.

The image acquirer 170 is described as an example in which at least one camera is included, and any image acquisition means for capturing an image regardless of a type of the camera can be applied.

The image acquirer 170 may include a plurality of cameras, and two cameras facing the front and the ceiling may be respectively installed on the front surface and an upper end portion of the main body so as to capture the images of the front and the ceiling, respectively. In addition, the image acquirer 170 may separately include a camera which captures the bottom surface.

The sensor unit 150 may include an infrared sensor, an ultrasonic sensor, and a laser sensor to detect the obstacle. In addition, for example, the sensor unit 150 may include an inclination sensor such as a tilting sensor or a gyro sensor to detect an inclination of the main body 10, and may include an illuminance sensor to detect brightness of the area where the main body 10 is located.

The moving robot 1 may further include a location acquiring means (not illustrated) for obtaining current location information. The moving robot 1 includes a GPS and a UWB to determine a current location.

The main body 10 includes a rechargeable battery (not illustrated). A charging terminal (not illustrated) of the battery is connected to a commercial power source (for example, a power outlet in home), or the main body 10 docks with a separate charging stand 40 connected to the commercial power source and the charging terminal is electrically connected to the commercial power source through a contact with a terminal 410 of the charging stand, and thus, charging of the battery may be performed. Electric components constituting the moving robot 1 can be supplied with power from the battery, and thus, the moving robot 1 in which the battery is charged can self-travel in a state where the moving robot is electrically separated from the commercial power source.

Fig. 2 is a block diagram illustrating a main portion of the moving robot according to the embodiment of the present disclosure.

As illustrated in FIG. 2, the moving robot 1 includes a traveler 250, a cleaner 260, a data unit 180, the obstacle detector 100, the image acquirer 170, the sensor unit 150, a communicator 290, an operator 160, an output unit 190, and a controller 110 for controlling all operations.

The operator 160 includes input means such as at least one button, a switch, or a touch pad to receive a command of the user. The operator may be provided in the upper end portion of the main body 10, as described above.

The output unit 190 has a display such as an LED or an LCD, and displays an operation mode, reservation information, a battery state, an operation state, and an error state of the moving robot 1. In addition, the output unit 190 includes a speaker or a buzzer, and outputs a predetermined sound effect, warning sound, or voice guidance corresponding to the operation mode, the reservation information, the battery state, the operation state, and the error state.

In the data unit 180, an acquired image input from the obstacle detector 100 is stored, reference data for an obstacle recognizer 111 to determine the obstacle is stored, and obstacle information for the detected obstacle is stored.

The data unit 180 stores obstacle data 181 for determining a type of the obstacle, image data 182 in which the captured image is stored, and map data 183 for the area. The map data 183 includes the obstacle information, and various types of maps for a travelable area searched by a moving robot are stored in the map data 183.

For example, the map data may include a basic map which includes information on the travelable area searched by the moving robot, a cleaning map in which an area is divided from the basic map, a user map which is created to allow the user to check the shape of the area, and a guide map in which the cleaning map and the user map overlap each other and are displayed.

The obstacle data 181 includes a location and a size of the detected obstacle. In addition, the obstacle data 181 may include information on obstacle recognition, information for determining the type of the obstacle, and information on an operation set according to the obstacle. The obstacle data include the operation of the moving robot for the recognized obstacle. That is, for example, the obstacle data include motion information on a traveling speed, a traveling direction, avoidance, and stoppage, and information on sound effects, warning sounds, and voice guidance output through a speaker 173. The image data 182 may include the captured image, for example, a still image, a video, and a panoramic image.

Moreover, the data unit 180 stores control data for controlling the operation of the moving robot, data according to the cleaning mode of the moving robot, and a detection signal such as ultrasound/laser of the sensor unit 150.

The data unit 180 stores data which can be read by a microprocessor, and may include a Hard Disk Drive (HDD), a Solid State Disk (SSD), a Silicon Disk Drive (SDD), a ROM, a RAM, a CD-ROM, a magnetic tape, a floppy disk, and an optical data storage device.

The communicator 290 communicates with a terminal 80 in a wireless communication method. Moreover, the communicator 290 is connected to an Internet network via an in-home network and may communicate with an external server 90 or the terminal 80 controlling the moving robot.

The communicator 290 transmits the generated map to the terminal 80, receives the cleaning command from the terminal, and transmits data regarding the operating state and the cleaning state of the moving robot to the terminal. In addition, the communicator 290 may transmit information on the obstacle detected during the traveling to the terminal 80 or the server 90.

The communicator 290 includes short-range wireless communication such as a ZigBee or a Bluetooth and a communication module such as Wi-Fi and WiBro to transmit and receive data.

The communicator 290 communicates with the charging stand 40 and may receive a charging signal for a charging stand return or a charging stand docking. The moving robot 1 searches for the charging stand based on a signal received through the communicator 290 and docks with the charging stand.

Meanwhile, the terminal 80 is a device which includes a communication module to be connectable to the network and has a program for controlling the moving robot or an application for controlling the moving robot, and a device such as a computer, a laptop, a smartphones, a PDA, or a tablet PC may be used as the terminal 80. In addition, the terminal may also use a wearable device such as a smart watch.

The traveler 250 includes at least one driving motor so that the moving robot travels according to the control command of a traveling controller 230. As described above, the traveler 250 may include a left wheel driving motor rotating a left wheel and a right wheel driving motor rotating a right wheel.

The cleaner 260 operates the brushes so that the dust or the foreign substances around the moving robot can be easily sucked, and operates the suction device to suck the dust or foreign substances. The cleaner 260 controls the operation of the suction fan provided in the suction unit 34 which sucks the foreign substances such as dust or garbage so that the dust is introduced into the foreign substances collection container through the suction port.

In addition, the cleaner 260 is installed at a rear of a bottom surface of the main body, and may further include a damp floorcloth cleaner (not illustrates) which mops the bottom surface in contact with the bottom surface and a water bucket (not illustrated) which supplies water to the damp floorcloth cleaner. A cleaning tool may be mounted on the cleaner 260. For example, a mop pad is mounted on the damp floorcloth cleaner to clean the bottom surface. The cleaner 260 may further include a separate driving means for transmitting a rotational force to a damp mop pad of the damp floorcloth cleaner.

The battery (not illustrated) supplies not only the power required for the driving motor, but also the power required for the entire operation of the moving robot 1. When the battery is discharged, the moving robot 1 can travel to be returned to the charging stand 40 for charging, and during the return traveling, the moving robot 1 can self-detect a location of the charging stand. The charging base 40 may include a signal transmitter (not illustrated) which transmits a predetermined return signal. The return signal may be an ultrasonic signal or an infrared signal, but is not limited thereto.

The obstacle detector 100 irradiates a pattern of a predetermined shape, and acquires the irradiated pattern as an image. The obstacle detector 100 may include at least one pattern irradiator (not illustrated) and a pattern acquirer. In some cases, the image acquirer 170 may operate as the pattern acquirer.

In addition, the obstacle detector 100 includes an ultrasonic sensor, a laser sensor, and an infrared sensor, and can detect a location and a distance of an obstacle located in the traveling direction. The obstacle detector 100 may detect an obstacle as an image in the traveling direction. The sensor unit and image acquirer can be included in the obstacle detector.

The sensor unit 150 includes a plurality of sensors to detect the obstacle. The sensor unit 150 uses at least one of laser, ultrasound, and infrared rays to detect an obstacle in a forward direction, that is, the traveling direction.

In addition, the sensor unit 150 may further include a cliff detection sensor which detects the presence of a cliff on the bottom in the traveling area. When the transmitted signal is reflected and incident to the sensor unit 150, the sensor unit 150 inputs information on the existence of the obstacle or the distance to the obstacle as the obstacle detection signal to the controller 110.

The sensor unit 150 includes at least one inclination sensor to detect the inclination of the main body. The inclination sensor calculates an inclined direction and angle when inclined in the front, rear, right, and right directions of the main body. The inclination sensor may use a tilt sensor, an acceleration sensor, or the like, and in a case where the inclination sensor is an acceleration sensor, any of a gyro type sensor, an inertial type sensor, and a silicon semiconductor type sensor can be applied.

In addition, the sensor unit 150 may detect an operation state or an abnormality through a sensor installed inside the moving robot 1.

The obstacle detector 100 may include a pattern irradiator, a light source, and an Optical Pattern Projection Element (OPPE) which generates a predetermined pattern by transmitting light irradiated from the light source. The light source may be a laser diode (LD), a light emitting diode (LED), or the like. The laser light is superior to other light sources in monochromaticity, straightness, and connection characteristics, allowing precise distance measurement. In particular, there is a problem that in the infrared or visible light, the accuracy of distance measurement largely varies according to factors such as a color and a material of an object. Accordingly, the laser diode is preferable as a light source. The Optical Pattern Projection Element may include a lens and a Diffractive Optical Element (DOE). Various patterns of light may be irradiated according to a configuration of the Optical Pattern Projection Element provided in each pattern irradiator.

The pattern acquirer may acquire an image in front of the main body 10 or an image in the ceiling. In particular, pattern light is shown on the image (hereinafter, referred to as an acquired image) acquired by the pattern acquirer 140, and hereinafter, an image of the pattern light shown in the acquired image is referred to as the light pattern, and the light pattern is an image in which the pattern light incident on the actual space is formed on the image sensor. When the pattern irradiator is not provided, the pattern acquirer acquires the image in front of the main body, in which the image does not include the pattern light.

The pattern acquirer may include a camera which converts an image of a subject into an electrical signal, and then converts the electrical signal into a digital signal to store the digital signal in a memory element. The camera may include at least one optical lens, and an image sensor (for example, a CMOS image sensor) which is configured to include a plurality of photodiodes (for example, pixels) imaged by light passing through the optical lens, and a Digital Signal Processor (DSP) which constitutes an image based on a signal output from light diodes. The digital signal processor can generate not only a still image but also a moving image including frames configured of still images.

The image sensor is a device which converts the optical image into an electrical signal and includes a chip in which a plurality of photo diodes are integrated. For example, a pixel is the photodiode. Charges are accumulated in each pixel by an image formed on the chip by light passing through the lens, and the charges accumulated in the pixels are converted into electrical signals (for example, voltage). As the image sensor, a Charge Coupled Device (CCD), a Complementary Metal Oxide Semiconductor (CMOS), or the like is well known.

The obstacle detector 100 analyzes the pattern through the acquired image to detect the obstacle according to the shape of the pattern, and the sensor unit 150 detects the obstacle through a sensor having the obstacle located at a detection distance of each sensor.

The image acquirer 170 continuously captures an image when the moving robot is operated. In addition, the image acquirer 170 may capture an image at a predetermined period or a predetermined distance unit. The image acquirer 170 may capture an image when an obstacle is detected by the obstacle detector 100, and may also capture an image in a movement state or a cleaning state in which an obstacle is not detected.

The image acquirer 170 may set a capturing cycle according to a movement speed of the moving robot. In addition, the image acquirer 170 may set the capturing cycle in consideration of the detection distance by the sensor unit and the movement speed of the moving robot.

The image acquirer 170 not only acquires an image in front of the traveling direction, but can also capture the ceiling shape of the top in the traveling direction.

The image acquirer 170 stores the image captured while the main body travels in the data unit 180, as the image data 182.

The obstacle detector 100 inputs information on the location of the detected obstacle or the movement of detected obstacle to the controller 110. The sensor unit 150 may input a detection signal for an obstacle detected by the provided sensor to the controller. The image acquirer 170 inputs the captured image to the controller.

The controller 110 controls the traveler 250 so that the moving robot travels within a designated area of the traveling area.

The controller 110 processes the data input by the operation of the operator 160 to set the operation mode of the moving robot, outputs the operation state through the output unit 190, and outputs the warning sound, the sound effect, and the voice guidance according to the operation state, the error state, or the detection of the obstacle through a speaker.

The controller 110 generates a map for a traveling area based on the image acquired from the image acquirer 170 or the obstacle information detected from the obstacle detector 100. The controller 110 generates a map based on obstacle information during the traveling in the area, but may determine the shape of the traveling area from the image of the image acquirer to generate the map.

The controller 110 controls the traveler such that the traveler recognizes an obstacle with respect to the obstacle detected from the image acquirer 170 or the obstacle detector 100 and performs a specific operation or moves to change a path according to the recognized obstacle. In addition, the controller may output a predetermined sound effect or warning sound through the output unit, if necessary, and may control the image acquirer such that the image acquirer captures an image.

The controller 110 controls the traveler 250 and the cleaner 260 during the traveling so that the traveler 250 and the cleaner 260 absorb the dust or foreign substances around the moving robot, and thus, the cleaning with the respect to the traveling area is performed. Accordingly, the cleaner 260 operates the brush so that the dust or foreign substances around the moving robot is easily sucked, and operates the suction device to suck the dust or foreign substances. The cleaner is controlled to suck the foreign substances during the traveling so as to perform the cleaning.

The controller 110 checks a charging capacity of the battery to determine a time when the battery is to be returned to the charging stand. When the charging capacity reaches a certain value, the controller 110 stops the operation being performed and starts searching the charging stand to return to the charging stand. The controller 110 may output a notification regarding the charging capacity of the battery and a notification regarding returning to the charging stand. In addition, the controller 110 may return to the charging stand when a signal transmitted from the charging stand is received through the communicator 290.

The controller 110 includes an obstacle recognizer 111, a map generator 112, and a travel controller 113.

The map generator 112 generates a map for the area based on obstacle information while traveling the area during an initial operation or when a map for the area is not stored. In addition, the map generator 112 updates the previously generated map based on the obstacle information obtained during the traveling.

The map generator 112 analyzes the image acquired during the traveling to determine the shape of the area to generate the map. The map generator 112 analyzes the image to extract a feature point, and determines the shape of the area from the extracted feature.

The map generator 112 may arrange a plurality of images or videos captured through an image acquirer according to a change in the location of a moving robot or a passage of a time, and match the location to determine the shape of the area.

The map generator 112 generates a basic map based on the information obtained from the obstacle recognizer 111 during the traveling, and divides the areas from the basic map to generates a cleaning map. The basic map is a map in which the shape of the cleaning area obtained through the traveling is displayed as an outline, and the cleaning map is a map in which the areas are divided on the basic map. The basic map and the cleaning map include a movable area of the moving robot and the obstacle information.

After the map generator 112 generates the basic map, the map generator 112 divides the cleaning area into a plurality of areas, includes a connection passage connecting the plurality of areas to each other, and generates a map including information on the obstacles in each area. The map generator 112 separates a small area to set a representative area for dividing the areas on the map, set the separated small areas to separate detailed areas so that the small areas are merged into the representative area, and thus, generates a map in which areas are divided.

The map generator 112 processes the shape of the area for each divided area. The map generator 112 may set properties for a divided area.

In addition, the map generator 112 generates a map including the shape of the area in the basic map or the cleaning map.

The map generator 112 analyzes the image capturing the ceiling among the acquired images captured by the image acquirer so as to extract the shape of the area.

The map generator 112 detects features such as points, lines, and faces for predetermined pixels constituting the image, and detects the obstacle based on the detected features.

The map generator 112 extracts an outline of the ceiling and determines the shape of the area based on the shape of the ceiling. The map generator 112 may extract an edge from the image of the ceiling to determine the shape of the area.

The map generator 112 arranges the images captured while the moving robot moves according to a capturing time or a captured location and connects the features extracted from respective images to each other to determine the shape of the area. When the acquired image is a video, the map generator 112 arranges a plurality of frames of the video according to a time sequence.

The map generator 112 may select only an image (or frame) related to the ceiling among the plurality of images to extract the feature. After the map generator 112 may filter unnecessary images or frames, the map generator 112 may extract the feature.

The map generator 112 may extract the shape of the area in consideration of a time at which the image is captured and the location of the moving robot at the time of the capturing, for example, a coordinate value and a height of the ceiling.

The map generator 112 may mutually compare overlapping features for the features extracted from respective images to determine a connection relationship between the features, and connect the extracted features to each other to determine the shape of the area.

The map generator 112 may extract a fluorescent lamp or a marker located on the ceiling from the image and set the extracted fluorescent lamp or the marker as a reference.

Moreover, the map generator 112 may divide an area from the features extracted from the image. The map generator 112 may determine the location of the door based on the connection relationship of the features, and therefore, divide a boundary between the areas to generate a map constituted by a plurality of areas.

After the map generator 112 connects and classifies the extracted features to form a reference line, the map generator 112 finally checks the shape of the area based on the reference line.

The obstacle recognizer 111 determines the obstacle through the data input from the image acquirer 170 or the obstacle detector 100, and the map generator 112 generates the map for the traveling area so that the information on the detected obstacle is included in the map.

The obstacle recognizer 111 analyzes the data input from the obstacle detector 100 to determine the obstacle. The obstacle recognizer 111 calculates the direction of the obstacle or the distance to the obstacle according to the detection signal of the obstacle detector, for example, the signal such as the ultrasound or the laser, analyzes an acquired image including the pattern to extract the pattern, and analyzes the shape of the pattern to determine the obstacle. When the obstacle recognizer 111 uses the ultrasonic or infrared signal, the type of the received ultrasound and a receiving time of the ultrasound are changed according to the distance to the obstacle or the location of the obstacle. Accordingly, the obstacle recognizer 111 determines the obstacle based on the distance to the obstacle or the location of the obstacle.

The obstacle recognizer 111 can detect a human body. The obstacle recognizer 111 analyzes the data input through the obstacle detector 100 or the image acquirer 170 to detect the human body, and determines whether or not the corresponding human body is a specific user.

The obstacle recognizer 111 may store data of a pre-registered user. For example, the obstacle recognizer 111 may store an image of the user and features according to a shape of the user as data to determine whether or not the user is a registered user.

The obstacle recognizer 111 analyzes the image data, extracts the feature of the obstacle, determines the obstacle based on the shape, size, and color of the obstacle, and determines the location of the obstacle.

The obstacle recognizer 111 may extract features of the obstacle based on the previously stored obstacle data, except for the background of the image from the image data, and thus, may determine the type of the obstacle. The obstacle data 181 is updated by new obstacle data received from the server. The moving robot 1 may store obstacle data for the detected obstacle and receive data regarding the type of the obstacle from the server for other data.

In addition, the obstacle recognizer 111 stores the recognized obstacle information in the obstacle data, and also transmits recognizable image data to the server 90 through the communicator 280 to determine the type of obstacle. The communicator 280 transmits at least one image data to server 90.

The travel controller 113 controls the traveler 250 so that the traveler 250 changes a movement direction or a traveling path in response to the obstacle information to pass through the obstacle or travels to avoid the obstacle.

The travel controller 113 controls the traveler 250 so as to independently control the operations of the left wheel driving motor and the right wheel driving motor so that the main body 10 travels straightly or travels while rotating. The travel controller 113 controls the traveler 250 and the cleaner 260 according to the cleaning command so that the main body 10 sucks the foreign substances while traveling the cleaning area and the cleaning is performed.

The travel controller 113 controls the traveler 250 to move to the area set based on the map generated by the map generator 112 or to move a main body within the set area. In addition, the travel controller 113 controls the traveler so that the traveler performs a predetermined operation or travels to change the traveling path in response to the obstacle according to the detection signal of the obstacle detector 100.

The travel controller 113 controls the traveler so that the traveler performs at least one of avoidance, approaching, setting of an approach distance, stopping, deceleration, acceleration, a reverse travel, U-tum, and changing the travel direction in response to the detected obstacle.

In addition, the travel controller 113 outputs an error and may output a predetermined warning sound or voice guidance as needed.

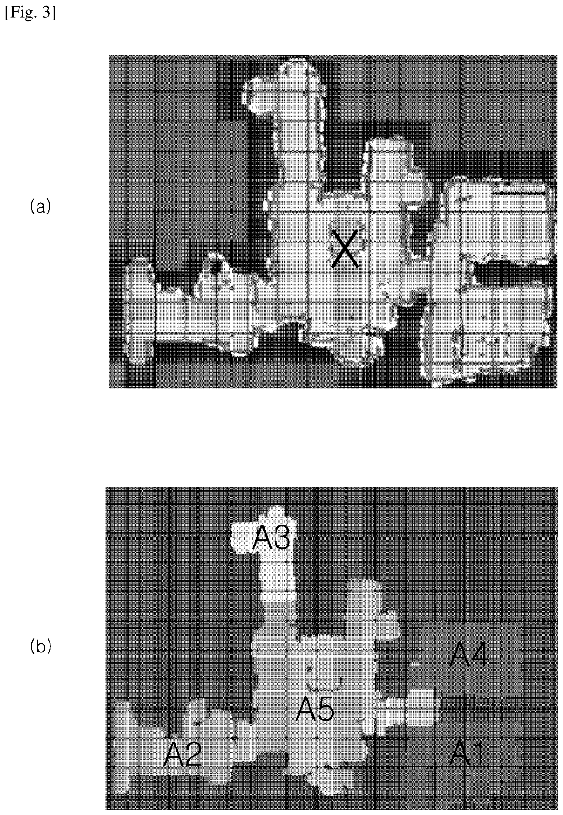

Figs. 3A and 3B are exemplary views illustrating the map of the moving robot according to the embodiment of the present disclosure.

As illustrated in 3A and 3B, the moving robot 1 can generate an eogs map in the area through wall following or the like during the initial operation or when the map is not stored. Moreover, the moving robot 1 may receive map data from the terminal 80 or the server 90.

The moving robot 1 may clean the cleaning area in a state where there is no map, generate a map through the acquired obstacle information, and update the previously stored map.

The map generator 112 generates a map based on the data and the obstacle information input from the image acquirer 170, the obstacle detector 100, and the sensor unit 150 during the traveling.

The map generator 112 generates a map for the movable area in the area through the wall following, extracts the feature from the image for the ceiling among the acquired images to determine the shape of the area, and generates the map based on the shape of the area.

As illustrated in Fig. 3A, the map generator 112 generates a basic map X1 for the area where the main body movably travels and, as illustrated in Fig. 3B, the map generator 112 divides the area to generate the cleaning map.

The basic map X is a movable area within the area and is an outline for the entire area, and in the basic map, the area is not divided.

The generator 112 may analyze the shape of the area from the image, divide the boundary between the areas, and may set a plurality of areas A1 to A5 in the basic map. The map generator 112 may extract the location of the door from the image to divide the area, and also divide the area through expansion and contraction of the basic map.

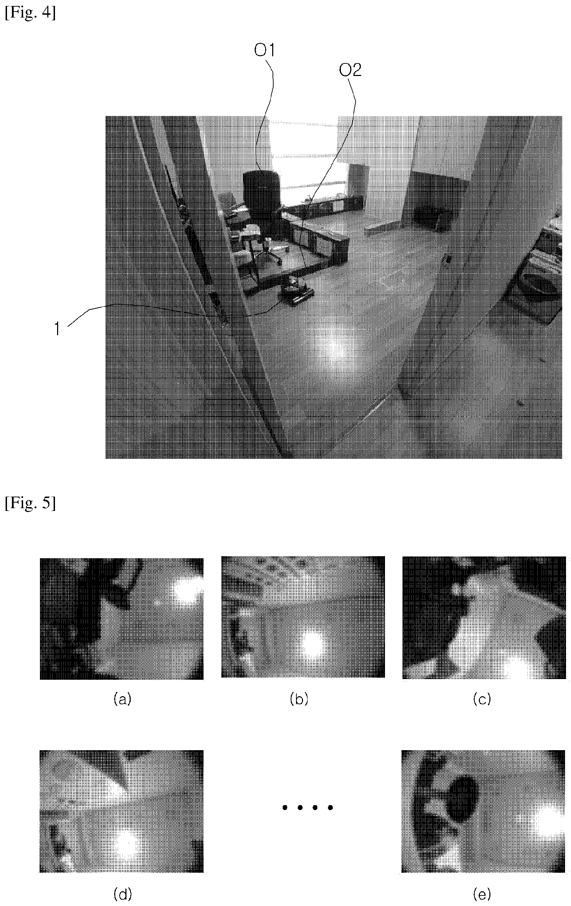

Fig. 4 is a view illustrating the area where the moving robot according to the embodiment of the present disclosure travels.

As illustrated in Fig. 4, the moving robot 1 travels an area where a plurality of obstacles O1 and O2 are located.

The moving robot 1 detects the obstacles O1 and O2 through the obstacle detector 100 and performs corresponding operations, and causes information on the detected obstacle, a location, a size, or the like of the obstacle to be included in the map to update the map.

The moving robot 1 determines the area based on the data obtained from the obstacle detector 100 or the image acquirer 170. However, as illustrated in the drawings, the user recognizes that furniture or objects are located in one room.

That is, the user recognizes an illustrated rectangular room as one area. However, since the moving robot 1 can travel some areas due to the obstacles, the moving robot only recognizes the travelable area and excludes some areas which cannot be traveled due to the furniture or the like from the map.

Accordingly, a difference occurs between the map generated by the moving robot 1 and the map of the area recognized by the user.

Therefore, the moving robot 1 may analyze the shape of the area from the shape of the ceiling, and generate a map which is easy for the user to recognize.

Figs. 5A to 5E are views illustrating images captured by the moving robot while the moving robot according to the embodiment of the present disclosure travels.

As illustrated in Figs. 5A to 5E, the moving robot 1 captures the image of the area through the image acquirer 170 during the traveling. The moving robot 1 may include a plurality of image acquirers, and the image acquirer 170 installed toward the ceiling may capture the ceiling to acquire the image for the ceiling. The image acquirer 170 may capture a panoramic image or a dynamic image in addition to a still image.

The moving robot 1 may extract features from the image based on the plurality of images captured during the traveling to generate the map.

The image acquirer 170 may capture the image in units of a predetermined moving distance or in units of a predetermined time, and also capture a continuous image.

The image acquirer 170 inputs the image for the ceiling, and the map generator 112 analyzes the image of the ceiling to determine the shape of each area in addition to the obstacle information.

The map generator 112 arranges a plurality of images based on at least one of a movement order of the image, a movement location, and a movement time for the ceiling, analyzes the images, and extracts vertices and corners as features.

In addition, the map generator 112 may extract a lighting device installed on the ceiling.

The map generator 112 extracts features from the plurality of images and combines features included in the plurality of images with each other to determine the shape of the area.

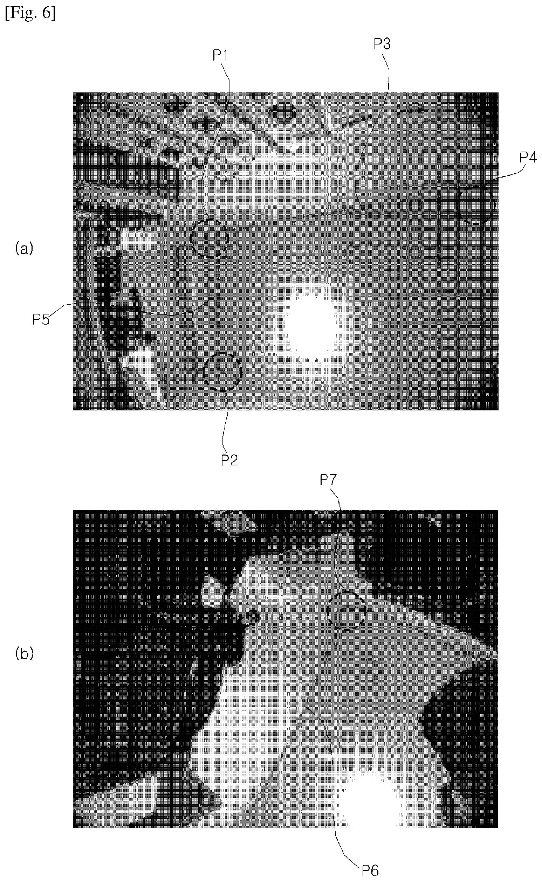

Figs. 6A and 6B are views for explaining a method of extracting the feature from the image of the moving robot according to the embodiment of the present disclosure.

As illustrated in Figs. 6A and 6B, the map generator 112 analyzes the image to extract the feature.

The map generator 112 extracts the corners P3 and P5 formed by the ceiling and side walls of the area as features. In addition, the map generator 112 extracts points where the three faces meet each other, that is, vertices P1, P2, andP4, as features.

The map generator 112 analyzes the image to extract line segments forming the corners from the extraction of the edge, and extracts the vertex at which at least lines meet each other as features.

The map generator 112 extracts the corners and vertices as the features for the plurality of images. As illustrated in Fig. 6B, the map generator 112 may extract a corner P6 and a vertex P7 as features from the image.

In general, an indoor area has a quadrangular shape including four vertices and four corners. In some cases, the indoor area may be configured in a circular, a triangular shape, or a fan shape.

The map generator 112 determines a connection relationship between feature points in the image based on the coordinates for each image to extracts the shape of the area.

For example, in Fig. 6A, three vertices are extracted as features. However, the other one is unknown. The map generator 112 can determine that, based on the coordinates of the image of Fig. 6A and the coordinates of the image of Fig. 6B, the images are images regarding the same area.

Moreover, the map generator 112 can determine that the corners and the vertices extracted from Fig. 6B are the remaining vertices of the area of the Fig. 6A. The map generator 112 rotates the image of Fig. 6B according to the Fig. 6A, and thereafter, connects the images of Figs. 6A and 6B to each other. Accordingly, the map generator 112 check the ceiling of the area including the four vertices P1, P2, P4, and P7 and the corners, and thus, can extract the shape of the area.

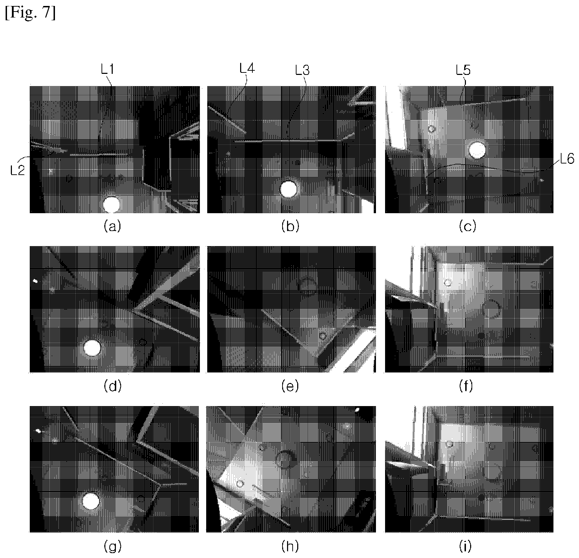

Figs. 7A to 7I are views illustrating feature data extracted from the image of the moving robot according to the embodiment of the present disclosure.

As illustrated in Figs. 7A to 7I, the map generator 112 extracts the feature for each of the plurality of images.

The map generator 112 may filter and delete some images of the features extracted from the image before extracting the features. The map generator 112 performs the filtering based on sharpness, illuminance, or the like of the image. When the image is not clear, the map generator 112 may filter a shaken image, an image which is too bright or too dark and from which the feature cannot be extracted so as to discard the image.

In addition, the map generator 112 may also discard overlapping images in which the same area is captured.

The map generator 112 performs a first filtering according to whether or not can divide line features into the line feature horizontal to a ground surface or the line feature vertical to the ground surface during the traveling, and a frequency, a location, and a height of the line, and after the cleaning, the map generator 112 can select area division results and an align reference line (line segment).

The obtained images are different from each other according to the location of the moving robot 1, during the cleaning or traveling, the map generator 112 preferentially extracts the image of the ceiling among the captured plurality of images.

The map generator 112 can extract the area estimated as the ceiling from the image based on the locations of the image and the moving robot, for example, the coordinate of the moving robot, the height to the ceiling, and the data measured through the sensor.

For example, an image captured when the moving robot reaches a side wall surface is likely not to include the ceiling, and thus, may be excluded.

The image generator 112 extracts the feature for the area estimated as the ceiling from the image and stores the feature.

The map generator 112 may extract the vertices and corners from a plurality of images as the features. In addition, the image captured by the moving robot 1 located on the bottom surface may be an image captured in a state where a portion of the ceiling is obscured by the obstacles on the side surface or the top, for example, the furniture.

The map generator 112 may determine, as the vertex, a point at which the line segment meets the line segment from the line segments L1 to L6 extracted from the image.

After the map generator 112 extracts the feature for each of the plurality of images, the map generator 112 determines a correlation between the images, combines the features with each other, and connects to each other to determine the shape of the area.

For example, the map generator 112 determines that, based on the location of the captured image, the first line segment of Fig. 7A and the third line segment L3 of Fig. 7B are located at the same corner, and the second line segment L2 and the fourth line segment L4 are the same as each other.

The map generator 112 compares and analyzes the image and the features, connects to the features to each other, and excludes the overlapping feature to extract the shape of the area.

When the image is captured, the map generator 112 may mutually match the features extracted from the image based on the location of the robot, for example, the coordinates. Moreover, the map generator 112 may mutually match the features extracted from the image and connect the features to each other, according to an order in which the images are captured.

For example, an image captured at the first point at the first time and the image captured at the second point at the second time may partially overlap, and the feature may have correlation. That is, a first feature extracted from a first image captured at a first time and a second feature extracted from a second image captured at a second time may be the same as each other, or may be partially connected to each other.

In addition, when a certain type of lighting device or a window is installed on the ceiling, the map generator 112 may extract and match the locations of the same lighting device or window as another feature to determine the correlation of each image.

For example, it is possible to check that the window is included in Figs. 7B, 7E, 7F, 7H, and 7I, and the same type of furniture is included in the image in Figs. 7A, 7B, 7D, and 7G.

In addition, the map generator 112 may classify the images captured in the plurality of areas into the images captured in the same area, synthesize features extracted from the image for the same area, and determine the shape of each area.

For example, first to fifth images captured in the first area and sixth to tenth images captured in the second area are divided and classified separately, the shape of the first area may be determined from the features extracted from the first to fifth images, and the shape of the second area may be determined from the feature extracted from the sixth to tenth images.

The map generator 112 may analyze the features of the image, mutually match the obstacles included in the image to connect the features of the image to each other, and thus, extract the shape of the area.

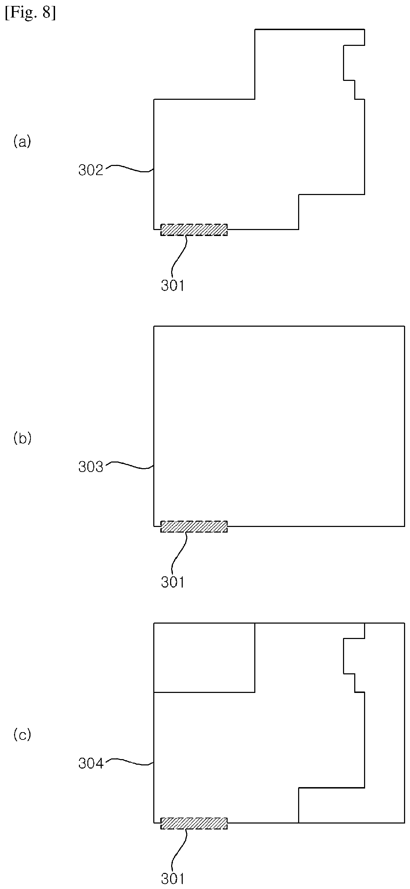

Figs. 8A to 8C are exemplary views illustrating maps generated by the image captured by the moving robot according to the embodiment of the present disclosure and the obstacle detected by the moving robot.

As illustrated in Fig. 8A, when the obstacle recognizer analyzes the information detected from the obstacle detector 100 and detects the obstacle, the map generator 112 generates the map so that the location and the size of the obstacle are included in the map.

The map generator 112 generates a map except for an area in which the main body cannot travel due to an obstacle. Accordingly, a first map 302 to which the location and size of the obstacle are reflected may be generated.

Moreover, as illustrated in Fig. 8B, the map generator 112 may mutually connect the features included in the connected images, exclude the overlapping feature, and thus, extract the shape of the area.

The map generator 112 may generate the shape of the area extracted from the connected image as the first map 303 and display the location of the door 301.

The map generator 112 extracts the door from the image and displays the door at a location corresponding to the door in the map.

The map generator 112 does not set the door 301 to the obstacle and sets the door 301 to an area which is connected to other areas.

The map generator 112 combines the two maps generated as illustrated in Figs. 8A and 8B with each other, and thus, generates the map of the area as illustrated in Fig. 8C.

The map generator 112 generates and stores the first map 302 according to the obstacle detection result and the second map 303 for the shape of the area extracted from the shape of the ceiling, respectively, and combines the first map and the second map with each other to generate a final map 304.

In the final map, the main body of the moving robot, the movable area, and the shape of the area are displayed to be all included in the final map.

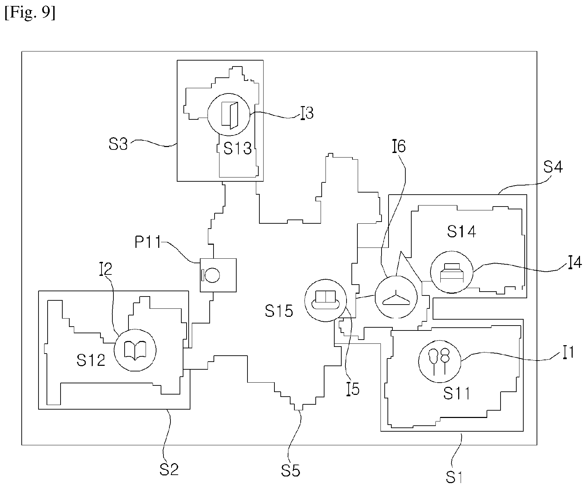

Fig. 9 is a view illustrating a map including a plurality of areas of the moving robot according to the embodiment of the present disclosure.

As illustrated in Fig. 9, the map generator 112 may generate the map including the plurality of areas extracted from the image.

As described in Figs. 7A to 7I, the map generator 112 may capture the plurality of images to extract the shape of the area, may combine the map according to the shape of the area for the plurality of areas and the map for the travelable area according to the obstacle based on the obstacle detected during the traveling with each other, and generate the final map for the plurality of areas.

The map generator 112 may extract the shape of a separate area for the plurality of areas, and thereafter, combine the plurality of areas with each other to generate the map.

Moreover, the map generator 112 may analyze the connection relationship between the areas through the image captured while moving between the areas and connect the areas to each other on the map. The map generator may determine the correlation between the areas based on at least one of the coordinates, the time, and the procedure when the image is captured and connect to each other. For example, when the map generator captures the first area, and thereafter, the map generator moves from the first area to the second area, the sixth image captured after the fifth image for the first area is the image of the second area. Accordingly, the map generator determines that the first area and the second area are areas adjacent to each other, and may connect the feature of the fifth image and the feature of the sixth image to each other.

In addition, the map generator may connect the plurality of areas to each other around the extracted door. For example, when the shapes of the first area and the second area are extracted, and thereafter, the first area and the second area are the adjacent areas, the areas may be connected to each other based on the location of the door when both areas are connected to each other. The door is included in both the first area and the second area, and thus, the areas may be connected to each other based on the location of the door included in both areas.

In addition, the map generator 112 may travel the plurality of areas, capture the image to extract the shapes of the plurality of areas from the connected image, generate the map. That is, the map generator 112 may extract the shapes in units of areas, and may also extract shapes for the plurality of regions while moving a plurality of areas through continuous traveling.

In the map, the plurality of areas S1 to S6 are disposed to be divided. However, the travelable areas S11 to S15 according to the actual areas and obstacles may be displayed to be divided.

The map generator 112 may overlap the shape of the actual area extracted from the image and the shape of the area based on the movable area including the obstacles detected during the traveling to generate the map.

For example, for the second area S2, the shape of the actual area is rectangular. However, a free-form area is generated due to the disposed obstacles. The map generator 112 superimposes and displays other free-form areas on the obstruction detection result in a rectangular area. Accordingly, the user can easily divide the area with respect to the area recognized by the user and the travelable area of the moving robot.

The map generator 112 divides the plurality of areas based on the door and displays properties of each area as icons I1 to 16 on the map. The map generator 112 may set the properties of the area in response to a terminal or a user input.

The properties of the area may be divided and displayed in a bedroom, a library, a dressing room, a living room, and a kitchen.

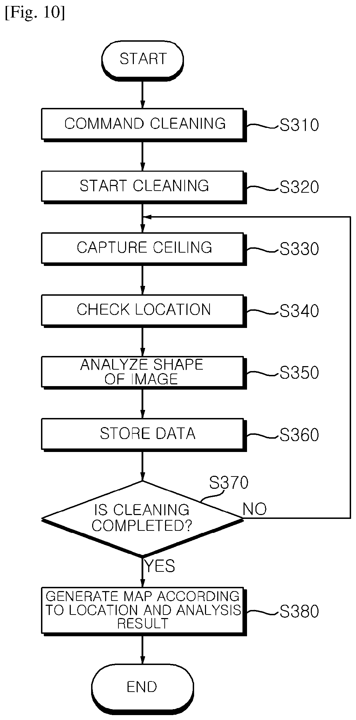

Fig. 10 is a flowchart illustrating a control method according to the generation of the map of the moving robot according to the embodiment of the present disclosure.

As illustrated in Fig. 10, the moving robot starts (S320) cleaning according to the cleaning command (S310).

The moving robot may receive the cleaning command through the operator 160 provided or a cleaning command through the terminal 80. The terminal controls and monitors the moving robot through an application for controlling the moving robot. The moving robot and the terminal may be connected to each other by wireless communication.

The controller may generate the map for the cleaning area during the traveling, depending on whether or not a previously generated map is included.

The moving robot controls the traveler and cleaner to detect the obstacle through the obstacle detector 100 while sucking foreign substances during the traveling to perform the cleaning.

The obstacle recognizer 111 divides the obstacles detected by the obstacle detector 100 to determine the locations and sizes of the obstacles. In addition, the obstacle recognizer 111 may determine the type of obstacle in some cases.

The map generator includes the obstacle information on the map according to the location and size of the detected obstacle. In addition, the map generator determines the movable area of the moving robot based on the detected obstacle and generates the map.

Meanwhile, the image acquirer 170 captures the ceiling at predetermined time intervals during the traveling (S330).

The map generator analyzes each image of the ceiling captured from the image acquirer and extracts the feature from the image (SS350). The map generator extracts the line segments of horizontal, vertical, and diagonal lines from the image to determine the shape of the ceiling and extracts the shape of the area based on the line segments.

The map generator 112 stores the captured images and the features extracted from the images as the data (S360).

When the cleaning is completed, that is, when all the cleaning areas are cleaned and the travel is completed (S370), the map generator 112 combines the features extracted from the stored data with each other to determine the shape of the area.

The map generator 112 may use the features of the same type at the same location for the plurality of features extracted from each image to determine a connection relationship between the features.

The map generator 112 generates the map including a plurality of areas according to the type of the area. In addition, the map generator 112 generates the map for the travelable area based on the detected obstacle.

The map generator 112 may detect the door connecting the area and the area to each other from an image, and display the location of the door on the map. Moreover, the map generator can divide the area based on the door.

The map generator 112 compares the map according to the shape of the area and the travelable area of the moving robot with each other to match the same area to each other, and combines the map according to the shape of the area and the map for the travelable area with each other to finally generate the map (S380).

The controller transmits the generated map to the terminal 80, and the terminal stores the received map and displays the map on the moving robot control application.

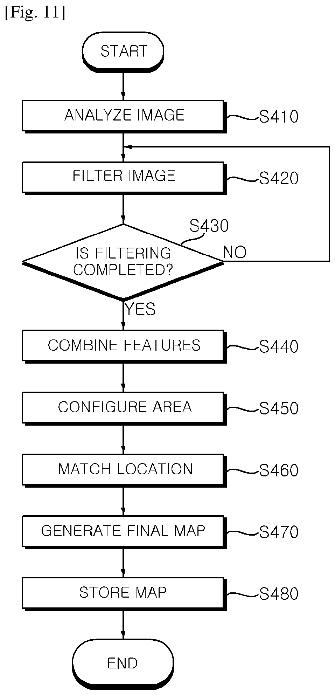

Fig. 11 is a flowchart illustrating a method of extracting the shape of the area from the image of the moving robot according to the embodiment of the present disclosure.

As illustrated in Fig. 11, the moving robot stores the image captured during the traveling as data, and analyzes the stored data (S410).

The controller divides the images according to the order of the captured time, and matches the divided image to the travel path of the moving robot (S420).

The controller filters the plurality of captured images according to the sharpness and brightness of the image (S430). The filtering of the image can be performed while the image is captured during the traveling, or filtering can be performed after the traveling is completed.

When the sharpness of the image is equal to or less than the set value or the brightness of the image is equal to or less than the set brightness, the controller discards the image. The controller discards the unidentifiable image and analyzes the identifiable image to generate the map.

In addition, the controller classifies the area where the image is captured and classifies the area as the image for each area to analyze the images for the same area. The controller can classify the image based on the location (coordinate) of the main body stored when the image is captured. For example, the image captured in the first area and the image captured in the second area can be divided and processed respectively.

The controller analyzes the images to extract the features, combines the features with each other in response to the correlation between the images (S440), and extracts the ceiling to constitute each area (S450).

The correlation between the images indicates whether the feature included in the image is the same feature or a portion of the feature, or whether or not the features are connected to each other according to the order in which the images are captured, and the controller can determine a relevance between the images according to the correlation. For example, the controller determines whether or not the features extracted from the first image captured at the first time and the second image captured at the second time are the same as each other, and the controller can determine whether the extracted features can be extended and combined with each other by the first image and the second image. The controller can determine the correlation according to the location, the time, or the order in which the image is captured.

After the controller extracts the shape of the area for the plurality of areas, the controller connects the areas to each other through the location matching for the areas to generate the map (S460). The controller can correct the map by matching the location as the image direction or the angle is different according to the traveling direction of the moving robot.

For example, the controller may determine whether the first area and the second area are the adjacent areas or whether the second area and the third area are connected to each other so as to connect the areas to each other. Moreover, the controller can connect the areas to each other based on the location of the door included in each area. The location at which the image is captured can be matched to the location of the area through the correlation between the features by the controller.

The controller may connect the plurality of areas with respect to the shape of the area extracted from the shape of the ceiling to generate the map for the plurality of areas.

In addition, the controller may combine the map according to the obstacle detection and the map of the area generated based on the shape of the ceiling extracted from the image with each other to generate the final map (S470). As a result, a map including the shape of the area and the travelable area is generated.

The controller may store the generated map (S480) and transmit the map to the terminal.

The terminal may execute a control application/program for the moving robot to display the map on a screen, and transmit a control command such as the cleaning command to the moving robot in response to a user input.

Accordingly, the moving robot travels the designated area and cleans the area.

Therefore, the user can check the area where the moving robot can travel, easily recognize the displayed map and the actual area, and also check the area where the moving robot can travel.

The moving robot according to the present embodiment operated as described above may be implemented by a form of an independent hardware device, and may be driven in a form included in other hardware devices such as a microprocessor or general-purpose computer system as at least one processor.

## Claims

1. A moving robot comprising:
a main body (10) configured to travel an area;
an obstacle detector (100) configured to detect an obstacle located in a traveling direction of the main body;
an image acquirer (170) configured to capture a front and a top in the traveling direction; and
a controller (110), wherein the controller (100) is configured to generate a first map which includes information on the obstacle detected by the obstacle detector (100) and is created for an area where the main body (10) can travel,
to generate a second map which determines a shape of a ceiling from a plurality of features extracted by analyzing the image captured by the image acquirer (170) and indicates a shape of the area corresponding to the shape of the ceiling, and
to generate a final map in which the first map according to an obstacle detection result and the second map indicating the shape of the area are combined with each other,
to generate the final map for the plurality of areas by combining the first map for a travelable area according to the obstacle and the second map according to the shape of the area for the plurality of areas, and
to provide the final map to a terminal (80) of a user.

2. The moving robot of claim 1, wherein the controller (110) is configured to extract a corner and a vertex where a face meets a face from the image as a feature for the area, and combines the plurality of features with each other to determine the shape of the ceiling.

3. The moving robot of claim 2, wherein the controller (110) is configured to combine the plurality of features with each other by analyzing a correlation of the plurality of features in response to at least one of a location, a sequence, and a time at which the image is captured.

4. The moving robot of claim 1, wherein the controller (110) is configured to extract a feature for checking a location of the ceiling from the image, sets a feature as a reference point, and connects the plurality of features to each other based on the reference point.

5. The moving robot of claim 1, wherein the controller (110) is configured to determines a shape of each area for a plurality of areas, and then matches a location of each area to generate the second map for the plurality of areas and/or the controller (110) is configured to analyze the image, extracts a location of a door connecting the area and the area to each other, and connects the plurality of areas to each other based on the location of the door in each area and/or the controller (110) is configured to connect the plurality of areas based on the location where the image is captured.

6. The moving robot of claim 1, wherein the controller (110) is configured to filter a plurality of images based on at least one of sharpness, overlap, and brightness of an image captured from the image acquirer (170).

7. The moving robot of claim 1, wherein the controller(1 10) is configured to divide and classifies a plurality of images captured in a plurality of areas, according to the area where the image is captured.

8. The moving robot of claim 1, wherein the controller (110) is configured to store a plurality of images captured during the traveling, and analyzes the captured images to generate the second map when the traveling is completed.

9. The moving robot of claim 1, wherein the controller (110) is configured to match locations of the first map and the second map and set a reference to arrange the maps, and then to combine the maps with each other to generates the final map.

10. A method of controlling a moving robot, comprising:
detecting an obstacle located in a traveling direction by an obstacle detector (100) during traveling;
capturing images of a front and a top in the traveling direction by an image acquirer (170) during the traveling;
generating a first map which includes information on the obstacle located in the traveling direction and is created for an area where the main body (10) can travel;
analyzing the image to extract a feature for determining a shape of a ceiling;
generating a second map which connects a plurality of features to each other to determine the shape of the ceiling and indicates a shape of the area corresponding to the shape of the ceiling;
generating a final map in which the first map and the second map are combined with each other so that the obstacle and the shape of the area are combined with each other;
generating the final map for the plurality of areas by combining the first map for a travelable area according to the obstacle and the second map according to the shape of the area for the plurality of areas; and
providing the final map to a terminal (80) of an user.

11. The method of controlling the moving robot of claim 10, further comprising:
extracting a corner and a vertex where a face meets a face from the image as a feature for the area; and/or
determining a correlation of the plurality of features in response to at least one of a location, a sequence, and a time at which the images are captured, for the plurality of features extracted from the image; and/or
setting one of features for checking a location of the ceiling from the image as a reference point to determine a correlation for the plurality of features; and/or
connecting or combining the plurality of features to each other based on a reference or a correlation for the plurality features extracted from the image.

12. The method of controlling the moving robot of claim 10, further comprising:
determining a shape of each area for a plurality of areas, and then matching a location of each area and connecting the plurality of areas to each other to generate the second map.

13. The method of controlling the moving robot of claim 10, further comprising:
analyzing the image to extract a location of a door connecting to the area and the area to each other;
setting any one of features for a location of the ceiling to a reference point; and
determining a location of each area corresponding to a location at which the image is captured,
wherein a plurality of areas are connected to each other corresponding to at least one of the location of the door, the reference point, and the location of the area to generate the second map.

14. The method of controlling the moving robot of claim 11, further comprising:
filtering a plurality of images based on at least one of sharpness, overlap, brightness of the captured image; and
dividing and classifying the plurality of image captured in the plurality of areas according to the area where the image is captured.

15. The method of controlling the moving robot of claim 10, further comprising:
matching the locations of the first map and the second map, setting a line serving as a reference to arrange the maps, and then combining the first map and the second map with each other.

## Patentansprüche

1. Beweglicher Roboter, der Folgendes umfasst:
einen Hauptkörper (10), der konfiguriert ist, sich in einem Bereich zu bewegen;
einen Hindernisdetektor (100), der konfiguriert ist, ein Hindernis, das sich in einer Bewegungsrichtung des Hauptkörpers befindet, zu detektieren;
eine Bilderfassungseinrichtung (170), die konfiguriert ist, eine in der Bewegungsrichtung voraus befindliche Zone und eine in der Bewegungsrichtung oben befindliche Zone in der Bewegungsrichtung aufzunehmen; und
eine Steuereinheit (110), wobei die Steuereinheit (100) konfiguriert ist, eine erste Karte zu erzeugen, die Informationen über das durch den Hindernisdetektor (100) detektierte Hindernis enthält und für einen Bereich, in dem sich der Hauptkörper (10) bewegen kann, erzeugt wird,
eine zweite Karte zu erzeugen, die eine Form einer Zimmerdecke aus mehreren Merkmalen, die durch Analysieren des durch die Bilderfassungseinrichtung (170) aufgenommenen Bildes extrahiert werden, bestimmt und eine Form des Bereichs, die der Form der Zimmerdecke entspricht, angibt, und
eine finale Karte zu erzeugen, in der die erste Karte in Übereinstimmung mit einem Hindernisdetektionsergebnis und die zweite Karte, die die Form des Bereichs angibt, miteinander kombiniert sind,
eine finale Karte für die mehreren Bereiche durch Kombinieren der ersten Karte für einen für die Bewegung geeigneten Bereich in Übereinstimmung mit dem Hindernis und der zweiten Karte in Übereinstimmung mit der Form des Bereichs für die mehreren Bereiche zu erzeugen, und
die finale Karte für ein Endgerät (80) eines Benutzers bereitzustellen.

2. Beweglicher Roboter nach Anspruch 1, wobei die Steuereinheit (110) konfiguriert ist, eine Ecke und einen Winkel, wo eine Fläche auf eine Fläche trifft, aus dem Bild als ein Merkmal für den Bereich zu extrahieren, und die mehreren Merkmale miteinander kombiniert, um die Form der Zimmerdecke zu bestimmen.

3. Beweglicher Roboter nach Anspruch 2, wobei die Steuereinheit (110) konfiguriert ist, die mehreren Merkmale durch Analysieren einer Korrelation der mehreren Merkmale in Reaktion auf einen Ort und/oder eine Folge und/oder eine Zeit, an dem bzw. in der bzw. zu der das Bild aufgenommen wurde, zu kombinieren.

4. Beweglicher Roboter nach Anspruch 1, wobei die Steuereinheit (110) konfiguriert ist, ein Merkmal zum Prüfen eines Ortes der Zimmerdecke aus dem Bild zu extrahieren, ein Merkmal als einen Referenzpunkt setzt und die mehreren Merkmale basierend auf dem Referenzpunkt miteinander verbindet.

5. Beweglicher Roboter nach Anspruch 1, wobei die Steuereinheit (110) konfiguriert ist, eine Form jedes Bereichs mehrerer Bereiche zu bestimmen, und dann einen Ort jedes Bereichs anpasst, um die zweite Karte für die mehreren Bereiche zu erzeugen, und/oder die Steuereinheit (110) konfiguriert ist, das Bild zu analysieren, einen Ort einer Tür, die den Bereich und einen Bereich miteinander verbindet, extrahiert und die mehreren Bereiche basierend auf dem Ort der Tür in jedem Bereich miteinander verbindet, und/oder die Steuereinheit (110) konfiguriert ist, die mehreren Bereiche basierend auf dem Ort, an dem das Bild aufgenommen wird, zu verbinden.

6. Beweglicher Roboter nach Anspruch 1, wobei die Steuereinheit (110) konfiguriert ist, mehrere Bilder basierend auf Schärfe und/oder Überdeckung und/oder Helligkeit eines Bildes, das durch die Bilderfassungseinrichtung (170) aufgenommen worden ist, zu filtern.

7. Beweglicher Roboter nach Anspruch 1, wobei die Steuereinheit (110) konfiguriert ist, mehrere Bilder, die in mehreren Bereichen aufgenommen werden, in Übereinstimmung mit dem Bereich, in dem das Bild aufgenommen wird, zu unterteilen und zu klassifizieren.

8. Beweglicher Roboter nach Anspruch 1, wobei die Steuereinheit (110) konfiguriert ist, mehrere Bilder, die während der Bewegung aufgenommen werden, zu speichern, und die aufgenommenen Bilder analysiert, um die zweite Karte zu erzeugen, wenn der Bewegungsvorgang abgeschlossen ist.

9. Beweglicher Roboter nach Anspruch 1, wobei die Steuereinheit (110) konfiguriert ist, Orte der ersten Karte und der zweiten Karte anzupassen und eine Referenz zu setzen, um die Karten anzuordnen, und dann die Karten miteinander zu kombinieren, um die finale Karte zu erzeugen.

10. Verfahren zum Steuern eines beweglichen Roboters, das Folgendes umfasst:
Detektieren eines Hindernisses, das sich in einer Bewegungsrichtung befindet, durch einen Hindernisdetektor (100) während einer Bewegung;
Aufnehmen von Bildern einer voraus befindlichen Zone und einer oben befindlichen Zone in der Bewegungsrichtung durch eine Bilderfassungseinrichtung (170) während der Bewegung;
Erzeugen einer ersten Karte, die Informationen über das in der Bewegungsrichtung befindliche Hindernis enthält und für einen Bereich, in dem sich der Hauptkörper (10) bewegen kann, erzeugt wird;
Analysieren des Bildes, um ein Merkmal zum Bestimmen einer Form einer Zimmerdecke zu extrahieren;
Erzeugen einer zweiten Karte, die mehrere Merkmale miteinander verbindet, um die Form der Zimmerdecke zu bestimmen, und die eine Form des Bereichs, die der Form der Zimmerdecke entspricht, angibt;
Erzeugen einer finalen Karte, in der die erste Karte und die zweite Karte miteinander kombiniert sind, so dass das Hindernis und die Form des Bereichsmiteinander kombiniert werden;
Erzeugen der finalen Karte für die mehreren Bereiche durch Kombinieren der ersten Karte für einen für die Bewegung geeigneten Bereich in Übereinstimmung mit dem Hindernis und der zweiten Karte in Übereinstimmung mit der Form des Bereichs für die mehreren Bereiche; und
Bereitstellen der finalen Karte für ein Endgerät (80) eines Benutzers.

11. Verfahren zum Steuern eines beweglichen Roboters nach Anspruch 10, das ferner Folgendes umfasst:
Extrahieren einer Ecke und eines Winkels, wo eine Fläche auf eine Fläche trifft, aus dem Bild als ein Merkmal für den Bereich; und/oder
Bestimmen einer Korrelation der mehreren Merkmale in Reaktion auf einen Ort und/oder eine Folge und/oder eine Zeit, an dem bzw. in der bzw. zu der die Bilder aufgenommen werden, für die mehreren Merkmale, die aus dem Bild extrahiert werden; und/oder
Setzen eines der Merkmale zum Prüfen eines Ortes der Zimmerdecke aus dem Bild als einen Referenzpunkt, um eine Korrelation für die mehreren Merkmale zu bestimmen; und/oder
Verbinden oder Kombinieren der mehreren Merkmale miteinander basierend auf einer Referenz oder einer Korrelation für die mehreren Merkmale, die aus dem Bild extrahiert werden.

12. Verfahren zum Steuern eines beweglichen Roboters nach Anspruch 10, das ferner Folgendes umfasst:
Bestimmen einer Form jedes Bereichs für mehrere Bereiche und dann Anpassen eines Ortes jedes Bereichs und Verbinden der mehreren Bereiche miteinander, um die zweite Karte zu erzeugen.

13. Verfahren zum Steuern eines beweglichen Roboters nach Anspruch 10, das ferner Folgendes umfasst:
Analysieren des Bildes, um einen Ort einer Tür, die den Bereich und einen Bereich miteinander verbindet, zu extrahieren;
Setzen irgendeines der Merkmale für einen Ort der Zimmerdecke als einen Referenzpunkt; und
Bestimmen eines Ortes jedes Bereichs, der einem Ort entspricht, an dem das Bild aufgenommen wird,
wobei mehrere Bereiche entsprechend dem Ort der Tür und/oder dem Referenzpunkt und/oder dem Ort des Bereichs miteinander verbunden werden, um die zweite Karte zu erzeugen.

14. Verfahren zum Steuern eines beweglichen Roboters nach Anspruch 11, das ferner Folgendes umfasst:
Filtern mehrerer Bilder basierend auf Schärfe und/oder Überdeckung und/oder Helligkeit des aufgenommenen Bildes; und
Unterteilen und Klassifizieren der mehreren Bilder, die in den mehreren Bereichen aufgenommen werden, in Übereinstimmung mit dem Bereich, in dem das Bild aufgenommen wird.

15. Verfahren zum Steuern eines beweglichen Roboters nach Anspruch 10, das ferner Folgendes umfasst:
Anpassen der Orte der ersten Karte und der zweiten Karte, Setzen einer Linie, die als Referenz dient, um die Karten anzuordnen, und dann Kombinieren der ersten Karte und der zweiten Karte miteinander.

## Revendications

1. Robot mobile comportant :
un corps principal (10) configuré pour parcourir une zone ;
un détecteur d'obstacle (100) configuré pour détecter un obstacle situé dans une direction de déplacement du corps principal ;
un dispositif d'acquisition d'image (170) configuré pour capturer un avant et un dessus dans la direction de déplacement ; et
une commande (110), dans lequel la commande (100) est configurée pour générer une première carte qui inclut des informations sur l'obstacle détecté par le détecteur d'obstacle (100) et est créée pour une zone où le corps principal (10) peut se déplacer,
pour générer une seconde carte qui détermine une forme d'un plafond à partir d'une pluralité de caractéristiques extraites en analysant l'image capturée par le dispositif d'acquisition d'image (170) et indique une forme de la zone correspondant à la forme du plafond, et
pour générer une carte finale dans laquelle la première carte en fonction d'un résultat de détection d'obstacle et la seconde carte indiquant la forme de la zone sont combinées l'une avec l'autre,
pour générer la carte finale pour la pluralité de zones en combinant la première carte pour une zone pouvant être parcourue en fonction de l'obstacle et la seconde carte en fonction de la forme de la zone pour la pluralité de zones, et
pour fournir la carte finale à un terminal (80) d'un utilisateur.

2. Robot mobile selon la revendication 1, dans lequel la commande (110) est configurée pour extraire de l'image un coin et un sommet où une face rencontre une face en tant que caractéristique pour la zone, et combine la pluralité de caractéristiques les unes avec les autres pour déterminer la forme du plafond.

3. Robot mobile selon la revendication 2, dans lequel la commande (110) est configurée pour combiner la pluralité de caractéristiques les unes avec les autres en analysant une corrélation de la pluralité de caractéristiques en réponse à au moins un élément parmi un emplacement, une séquence et un instant auquel l'image est capturée.

4. Robot mobile selon la revendication 1, dans lequel la commande (110) est configurée pour extraire une caractéristique destinée à vérifier un emplacement du plafond à partir de l'image, définit une caractéristique en tant que point de référence, et relie la pluralité de caractéristiques les unes aux autres sur la base du point de référence.

5. Robot mobile selon la revendication 1, dans lequel la commande (110) est configurée pour déterminer une forme de chaque zone pour une pluralité de zones, et la fait ensuite correspondre à un emplacement de chaque zone afin de générer la seconde carte pour la pluralité de zones et/ou la commande (110) est configurée pour analyser l'image, extrait un emplacement d'une porte reliant la zone et la zone l'une à l'autre, et relie la pluralité de zones les unes aux autres sur la base de l'emplacement de la porte dans chaque zone et/ou la commande (110) est configurée pour relier la pluralité de zones sur la base de l'emplacement où l'image est capturée.

6. Robot mobile selon la revendication 1, dans lequel la commande (110) est configurée pour filtrer une pluralité d'images sur la base d'au moins un élément parmi la netteté, le chevauchement et la luminosité d'une image capturée à partir du dispositif d'acquisition d'image (170).

7. Robot mobile selon la revendication 1, dans lequel la commande (110) est configurée pour diviser et classer une pluralité d'images capturées dans une pluralité de zones, en fonction de la zone où l'image est capturée.

8. Robot mobile selon la revendication 1, dans lequel la commande (110) est configurée pour stocker une pluralité d'images capturées pendant le déplacement, et analyse les images capturées afin de générer la seconde carte lorsque le déplacement est terminé.

9. Robot mobile selon la revendication 1, dans lequel la commande (110) est configurée pour faire correspondre des emplacements de la première carte et de la seconde carte et définir une référence afin d'agencer les cartes, et pour ensuite combiner les cartes l'une avec l'autre afin de générer la carte finale.

10. Procédé de commande d'un robot mobile, comportant les étapes consistant à :
détecter un obstacle situé dans une direction de déplacement par un détecteur d'obstacle (100) pendant un déplacement ;
capturer des images d'un avant et d'un dessus dans la direction de déplacement par un dispositif d'acquisition d'images (170) pendant le déplacement ;
générer une première carte qui inclut des informations sur l'obstacle situé dans la direction de déplacement et est créée pour une zone où le corps principal (10) peut se déplacer ;
analyser l'image pour extraire une caractéristique afin de déterminer une forme d'un plafond ;
générer une seconde carte qui relie une pluralité de caractéristiques les unes aux autres afin de déterminer la forme du plafond et indique une forme de la zone correspondant à la forme du plafond ;
générer une carte finale dans laquelle la première carte et la seconde carte sont combinées l'une avec l'autre de sorte que l'obstacle et la forme de la zone sont combinés l'un avec l'autre ;
générer la carte finale pour la pluralité de zones en combinant la première carte pour une zone pouvant être parcourue en fonction de l'obstacle et la seconde carte en fonction de la forme de la zone pour la pluralité de zones ; et
fournir la carte finale à un terminal (80) d'un utilisateur.

11. Procédé de commande du robot mobile selon la revendication 10, comportant en outre les étapes consistant à :
extraire de l'image un coin et un sommet où une face rencontre une face en tant que caractéristique pour la zone ; et/ou
déterminer une corrélation de la pluralité de caractéristiques en réponse à au moins un élément parmi un emplacement, une séquence et un instant auquel les images sont capturées, pour la pluralité de caractéristiques extraites de l'image ; et/ou
définir l'une des caractéristiques destinée à vérifier un emplacement du plafond à partir de l'image en tant que point de référence afin de déterminer une corrélation pour la pluralité de caractéristiques ; et/ou
relier ou combiner la pluralité de caractéristiques les unes aux autres sur la base d'une référence ou d'une corrélation pour la pluralité de caractéristiques extraites de l'image.

12. Procédé de commande du robot mobile selon la revendication 10, comportant en outre l'étape consistant à :
déterminer une forme de chaque zone pour une pluralité de zones, et la faire ensuite correspondre avec un emplacement de chaque zone et relier la pluralité de zones les unes aux autres afin de générer la seconde carte.

13. Procédé de commande du robot mobile selon la revendication 10, comportant en outre les étapes consistant à :
analyser l'image pour extraire un emplacement d'une porte reliant la zone et la zone l'une à l'autre ;
définir l'une quelconque des caractéristiques pour un emplacement du plafond par rapport à un point de référence ; et
déterminer un emplacement de chaque zone correspondant à un emplacement où l'image est capturée,
dans lequel une pluralité de zones sont reliées les unes aux autres en correspondance avec au moins un élément parmi l'emplacement de la porte, le point de référence et l'emplacement de la zone afin de générer la seconde carte.

14. Procédé de commande du robot mobile selon la revendication 11, comportant en outre les étapes consistant à :
filtrer une pluralité d'images sur la base d'au moins un élément parmi la netteté, le chevauchement et la luminosité de l'image capturée ; et
diviser et classer la pluralité d'images capturées dans la pluralité de zones en fonction de la zone où l'image est capturée.

15. Procédé de commande du robot mobile selon la revendication 10, comportant en outre l'étape consistant à :
mettre en correspondance les emplacements de la première carte et de la seconde carte, définir une ligne servant de référence pour agencer les cartes, et combiner ensuite la première carte et la seconde carte l'une avec l'autre.
